Europäisches Patentamt

European Patent Office

Office européen des brevets

(19)

(11) Numéro de publication : **0 117 795 B1**

(12) # FASCICULE DE BREVET EUROPÉEN

(45) Date de publication du fascicule du brevet :
15.04.87

(51) Int. Cl.⁴ : **F 02 B 37/12**

(21) Numéro de dépôt : **84400244.4**

(22) Date de dépôt : **03.02.84**

(54) Moteur à combustion interne suralimenté par turbocompresseur.

(30) Priorité : **03.02.83 FR 8301705**

(43) Date de publication de la demande :
**05.09.84 Bulletin 84/36**

(45) Mention de la délivrance du brevet :
**15.04.87 Bulletin 87/16**

(84) Etats contractants désignés :
**DE GB IT SE**

(56) Documents cités :
**EP-A- 0 038 232**
**FR-A- 2 338 382**
**FR-A- 2 381 175**
**FR-A- 2 474 591**
**FR-A- 2 487 913**
**GB-A-   557 261**

(73) Titulaire : **Office National d'Etudes et de Recherches Aerospatiales (O.N.E.R.A.)**
**29 Avenue de la Division Leclerc**
**F-92320 Châtillon-sous-Bagneux (FR)**

(72) Inventeur : **Boudigues, Serge**
**38, avenue Franklin Roosevelt**
**F-92330 Sceaux (FR)**

(74) Mandataire : **Fort, Jacques et al**
**CABINET PLASSERAUD 84, rue d'Amsterdam**
**F-75009 Paris (FR)**

## Description

L'invention concerne les moteurs à combustion interne suralimentés par au moins un turbocompresseur comprenant au moins un compresseur dont la sortie est reliée au collecteur d'admission du moteur, entraîné par une turbine mue par les gaz d'échappement du moteur, le terme « moteur à combustion interne » devant être interprété comme désignant tout moteur dont la combustion s'effectue dans une enceinte à volume variable, qu'il soit à allumage spontané ou à allumage commandé, alternatif ou rotatif.

L'invention trouve une application chaque fois que le moteur fournit, à son point nominal de fonctionnement, des gaz d'échappement dont l'énergie permet au compresseur d'augmenter la pression de l'air aspiré par le moteur. Toutefois, l'invention présente une application particulièrement importante, bien que non exclusive, constituée par les moteurs de traction qui doivent présenter un couple suffisant à bas régime et doivent être capables de fournir une puissance très variable pour une même vitesse de rotation, à condition que l'allumage dans ces moteurs n'exige pas une pression d'admission minimale d'air : ce cas est celui des moteurs à essence et des moteurs Diesel à rapport volumétrique élevé utilisés pour la propulsion des véhicules automobiles.

Les problèmes d'adaptation posés par l'association d'un turbocompresseur, machine à flux continu dont la pression de refoulement est liée au débit d'air qui la traverse par une loi dite « champ pression-débit », qui dépend uniquement de la géométrie du compresseur et de la turbine, à un moteur, machine volumétrique à flux discontinu, sont connus depuis longtemps et n'ont pas reçu à ce jour de solution pleinement satisfaisante. Avant d'exposer l'invention, il peut être utile de les rappeler en insistant sur ceux qui sont particulièrement aigus dans le cas des moteurs de traction et, notamment, d'automobile.

Comme indiqué plus haut, la relation entre la pression de refoulement du compresseur et le débit d'air qui le traverse est différente de celle correspondant au fonctionnement d'un moteur alternatif, qui absorbe un débit volumétrique sensiblement proportionnel à sa vitesse de rotation, à une pression maximale fixée par des considérations mécaniques ou physico-chimiques. Si l'on dimensionne le turbocompresseur de façon que la pression de suralimentation qu'il fournit ne dépasse jamais la valeur maximale acceptable pour le moteur, l'action du turbocompresseur de suralimentation est négligeable aussi longtemps que la charge du moteur ne se rapproche pas de sa charge maximale et le couple à bas régime du moteur est très faible, pratiquement égal à celui d'un moteur non suralimenté de même cylindrée. Pour écarter ce problème, il faut introduire un paramètre de réglage supplémentaire du turbocompresseur. La solution la plus utilisée à l'heure actuelle consiste à adopter un turbocompresseur dont la caractéristique dans le champ pression-débit du compresseur est telle que la pression de suralimentation maximale acceptable pour le moteur est atteinte dès une charge partielle et à munir le moteur d'une vanne de décharge, fréquemment dénommée par le terme anglosaxon de « waste gate », qui ouvre le collecteur d'échappement à l'atmosphère. Cette solution a l'avantage d'être simple. Mais en contrepartie, elle présente de nombreux inconvénients : elle conduit, lorsque le moteur alternatif tourne à haut régime, à une valeur élevée de la pression d'échappement, donc à un contre-balayage, à une baisse de puissance et à une augmentation de la consommation du moteur par unité de puissance. Au surplus, elle correspond, dans les conditions nominales de fonctionnement du moteur suralimenté, à un fonctionnement du turbocompresseur en un point du champ pression-débit du compresseur pour lequel son rendement est faible.

On a également proposé d'utiliser un turbocompresseur dont la turbine comporte deux cavités (FR-A-2 465 069). Cette solution permet un fonctionnement satisfaisant à haut régime. Par contre, à bas régime, la seconde cavité n'est pas alimentée par les gaz. Elle fonctionne alors en compresseur centrifuge de mauvais rendement et pénalise la puissance et le rendement du moteur dans le domaine où il est justement le plus utilisé, approximativement entre 20 et 60 % de sa puissance nominale.

On connaît par ailleurs (FR-A-2 381 175) un moteur à combustion interne suivant le préambule de la revendication 1. Les aubes de distributeur peuvent jouer le rôle d'organes d'étranglement et de fermeture et interviennent lorsque la température est basse. Au contraire, les aubes directrices sont en position ouverte et la turbine ne reçoit que les gaz très chauds d'échappement du moteur lors du fonctionnement en charge. Ce document aborde donc un problème totalement différent de celui que vise à résoudre l'invention et ne peut résoudre ce dernier.

Le document FR-A-2 474 591 décrit de son côté un système très complexe de suralimentation de moteur à allumage par compression, destiné à optimiser les conditions de fonctionnement par action sur divers paramètres. Parmi ces derniers figure éventuellement le calage des aubes de la turbine. Les paramètres de fonctionnement pris en considération comprennent par ailleurs la vitesse de rotation du moteur et la température des gaz d'échappement. Mais il n'apparaît pas que le problème posé par le fonctionnement d'un mécanisme mobile dans des gaz d'échappement très chauds soit posé ou résolu.

Le document GB-A-557 261 décrit un moteur à combustion interne suralimenté par un turbocompresseur dans lequel les aubes de turbine sont maintenues à température acceptable par refroidissement à l'air. Ce document se borne donc à enseigner l'un des nombreux procédés connus pour éviter l'échauffement excessif de la partie amont de la turbine.

Enfin, le document EP-A-0 038 232 décrit encore un moteur suralimenté par turbocompresseur. Une partie du débit d'air comprimé fourni par le compresseur est dérivée et constitue le fluide d'entraînement dans un éjecteur · de mélange avec une fraction des gaz d'échappement de la turbine. Le mélange est admis au collecteur d'échappement du moteur et revient à la turbine avec les gaz brûlés. Une telle disposition, supposée améliorer la récupération d'énergie, n'est pas susceptible d'assurer un fonctionnement à bon rendement de la turbine à tous les régimes, du fait de la désadaptation de l'orientation des aubes au débit d'entrée.

On a également proposé de munir l'entrée de la turbine d'une vanne de réglage (FR-A-2 485 634). Mais on influe très peu sur le moment de quantité du mouvement du gaz qui définit la loi pression-débit du turbocompresseur, de sorte que l'amélioration obtenue est négligeable. Au surplus, ces deux solutions impliquent la présence de mécanismes mobiles dans les gaz d'échappement très chauds, d'où un risque de durée de vie faible.

L'invention vise à fournir un moteur suralimenté par au moins un turbocompresseur répondant mieux que ceux antérieurement connus aux exigences de la pratique, notamment en ce qu'il atténue dans une large mesure les inconvénients mentionnés ci-dessus et, en particulier, permet de conserver un rendement élevé du turbocompresseur à tous les régimes où le moteur fournit de la puissance.

Dans ce but, l'invention propose notamment un moteur à combustion interne tel que défini par la partie caractérisante de la revendication 1.

L'amenée d'air dans les gaz d'échappement permet de réduire la température des gaz admis à la turbine et, en conséquence, autorise un fonctionnement fiable du mécanisme d'orientation des aubes du distributeur. Dès une valeur de 1 du taux de dilution (rapport du débit d'air dérivé au débit d'air traversant le moteur), la température maximale des gaz d'échappement est réduite à une valeur d'environ 550 °C, parfaitement compatible avec la présence d'organes mobiles d'adaptation. Un dispositif anti-retour peut être prévu sur la conduite de dérivation pour éviter le retour des gaz d'échappement vers l'admission.

Dans toutes les conditions où le moteur exerce un couple d'entraînement, la pression au refoulement du compresseur est supérieure à la pression à l'admission de la turbine. Ce fait est utilisé en injectant l'air comprimé provenant du compresseur et ayant traversé la conduite de dérivation par un éjecteur qui débouche dans la pipe d'échappement du moteur, en amont de la turbine.

La plage de débattement des aubes dépendra beaucoup de l'effet recherché. On peut envisager d'aller jusqu'à un calage de l'ordre de — 10°, qui permet de sous-alimenter le moteur, et jusqu'à un calage de + 70°, au ralenti. Mais, dans la pratique, une plage de débattement ayant une amplitude de 40°, allant par exemple de 20 à 60°, sera parfaitement acceptable lorsque la vitesse de rotation du moteur en charge varie de 2 000 t/mn à 5 500 t/mn. Cette plage de variation réduite du calage des aubes suffit pour que l'angle d'incidence des gaz sur la grille d'aubes rotoriques ne varie que de quelques degrés et pour que l'angle à la sortie ne dépasse pas ± 10° pour une enthalpie constante dans le compresseur et pour un taux de dilution constant.

La présence du flux d'air de dérivation permet d'obtenir des résultats favorables s'ajoutant à ceux déjà mentionnés : ce flux de dérivation, étant continu, contribue à atténuer les pulsations de vitesse et de pression du flux d'échappement du moteur, donc améliore le rendement de la turbine. La dilution joue un rôle de silencieux qui s'ajoute à celui de la turbine. La diminution de la température maximale à l'entrée de la turbine permet de diminuer les jeux entre rotor et stator, donc d'améliorer encore le rendement de la turbine. Elle diminue la vitesse angulaire de rotation du turbocompresseur par $\sqrt{1 + \lambda}$ ($\lambda$ étant le taux de dilution) avec effet favorable sur la vitesse linéaire des paliers et, par ailleurs, sur les rendements, par effet de Reynolds. Enfin, en diminuant la contrepression à l'échappement, elle permet de réaliser un balayage assurant un meilleur remplissage des cylindres.

L'invention sera mieux comprise à la lecture de la description qui suit de modes particuliers de réalisation de l'invention donnés à titre d'exemples non limitatifs. La description se réfère aux dessins qui l'accompagnent, dans lesquels :

la Figure 1 est un schéma de principe d'un moteur suralimenté muni d'une conduite de dérivation et d'un turbocompresseur, suivant un mode de réalisation de l'invention ;

la Figure 2 est une vue de détail montrant une constitution possible du mécanisme de réglage du calage des aubes dans la turbine de la Figure 1 ;

la Figure 3 est un schéma de détail montrant les paramètres qui interviennent pour la détermination du calage, vu suivant l'axe de rotation de la turbine, supposée à écoulement radial centrifuge ou centripète ;

la Figure 4 montre la détermination du calage à donner aux aubes de distributeurs à partir des triangles des vitesses, les notations étant celles de la Figure 3 ;

les Figures 5A et 5B montrent, respectivement, le calage optimum et le rendement de la turbine en fonction de la vitesse du moteur, pour diverses variations d'enthalpie ΔH dans la turbine.

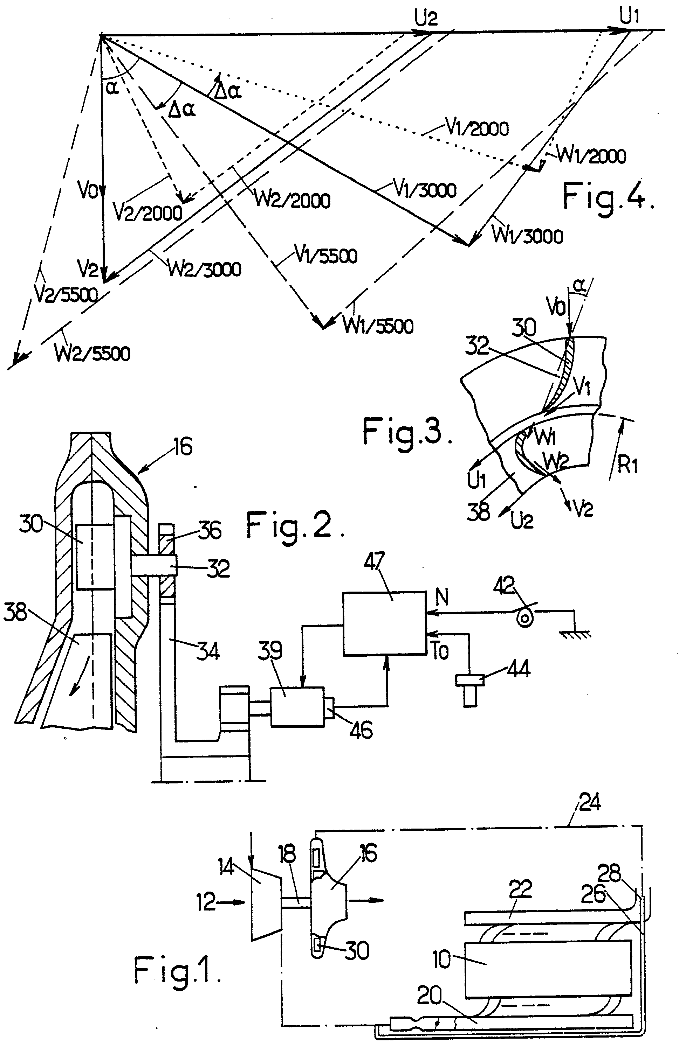

Sur la Figure 1, le moteur 10, que l'on supposera être un moteur à combustion interne à allumage commandé, par exemple au moyen d'une étincelle électrique, est associé à un turbocompresseur 12 comportant un compresseur 14 et une turbine 16 dont les rotors sont reliés par un arbre 18. On supposera dans ce qui suit que le compresseur 14 est à simple étage et que la turbine 16 est du type à écoulement radial, étant bien entendu que l'invention s'appliquerait tout aussi bien à une turbine à écoulement axial. De même, la présente description concerne un moteur comportant un seul collecteur d'admission et, par conséquent, un seul turbocompresseur, mais lorsque plusieurs collecteurs d'admission alimentant chacun un groupe de cylindres sont prévus, le moteur peut comporter plusieurs turbocompresseurs conformes à l'invention. Un refroidisseur d'air (non représenté) peut être interposé entre la sortie du compresseur 14 et le collecteur d'admission 20 du moteur. Ce dernier peut être du type à injection directe dans les chambres de combustion, à injection basse pression dans la tubulure d'admission (multipoint ou monopoint) ou à carburateur. Dans ce dernier cas, le carburateur sera placé en aval du compresseur 14.

Le collecteur d'échappement 22 du moteur est de son côté relié, par une conduite 24, à l'entrée de la turbine 16. Bien que la mise en œuvre de l'invention, qui sera décrite plus loin, rende inutile la présence d'une vanne de décharge pour le fonctionnement normal du moteur, une telle vanne de décharge peut cependant être prévue à titre de sécurité. Il n'est pas nécessaire de décrire ici une telle vanne, dont la constitution est bien connue.

Une conduite de dérivation 26 doit être prévue pour amener une fraction de l'air provenant du compresseur 14 à la turbine, en la mélangeant aux gaz d'échappement en amont de la turbine. Dans le cas illustré sur la Figure 1, cette conduite est prévue entre le collecteur d'admission 20 et la tubulure, en aval du collecteur d'échappement 22. Elle prend naissance côté admission, en amont du dispositif de laminage des gaz (« papillon ») permettant de régler la puissance du moteur et en amont de tout dispositif de carburation. La conduite 26 se termine par un ajutage 28 constituant éjecteur, de façon que l'air frais, admis à une pression supérieure à celle des gaz d'échappement, entraîne ces derniers, favorisant encore le balayage et ajoutant à la quantité de mouvement des gaz d'échappement. La conduite 26 peut être munie de moyens anti-retour afin d'éviter le recyclage des gaz d'échappement vers l'admission.

La turbine 16 comporte un stator muni d'un distributeur constitué d'une grille d'aubes 30 (Figures 2 et 3) orientables. Chaque aube est montée, dans le cas de la Figure 2, sur un tourillon 32 traversant le carter de turbine et parallèle à l'axe de rotation du rotor. Des moyens sont prévus pour commander simultanément toutes les aubes 30. Sur la Figure 2, ils comportent une couronne dentée 34 qui engrène avec des pignons dentés 36 calés chacun sur un des tourillons 32.

Pour que la turbine fonctionne avec un rendement satisfaisant, la vitesse absolue $\overrightarrow{V1}$ à la sortie du distributeur doit avoir une orientation telle que la vitesse relative $\overrightarrow{W1}$ par rapport au rotor soit sensiblement tangente aux aubes du rotor 38. La vitesse relative $\overrightarrow{W2}$ à la sortie du rotor 38 doit, de son côté, être telle que la vitesse absolue $\overrightarrow{V2}$ soit sensiblement radiale.

Le calage $\alpha$ à donner aux aubes 30 pour obtenir ce résultat peut être déterminé pour chaque valeur de la variation d'enthalpie $\Delta H$ dans la turbine et la vitesse N de rotation du moteur. On sait que $\Delta H$ est égal à :

$$\int_{T_0}^{T_2} C_p \cdot \delta T \, .$$

Dans cette formule, $C_p$ est la chaleur spécifique à pression constante du gaz, $T_0$ et $T_2$ sont les températures en aval et en amont de la turbine.

Le calage $\delta$ pour chaque couple de valeur de $\Delta H$ et de N est déterminé par construction des triangles des vitesses W (vitesse relative), V (vitesse absolue) et U (vitesse tangentielle du rotor) à l'entrée et à la sortie du rotor. A titre d'exemple, la figure 4 montre les triangles des vitesses dans une situation représentative du fonctionnement d'un moteur d'automobile courant, pour $\Delta H$ = 55 000 joules/kg et N = 3 000 t/mn. Les vecteurs en tirets et en pointillés montrent respectivement l'orientation de $\overrightarrow{V1}$, et donc le calage, à réaliser pour la même valeur de $\Delta H$, mais pour des vitesses de 5 500 et 2 000 t/mn.

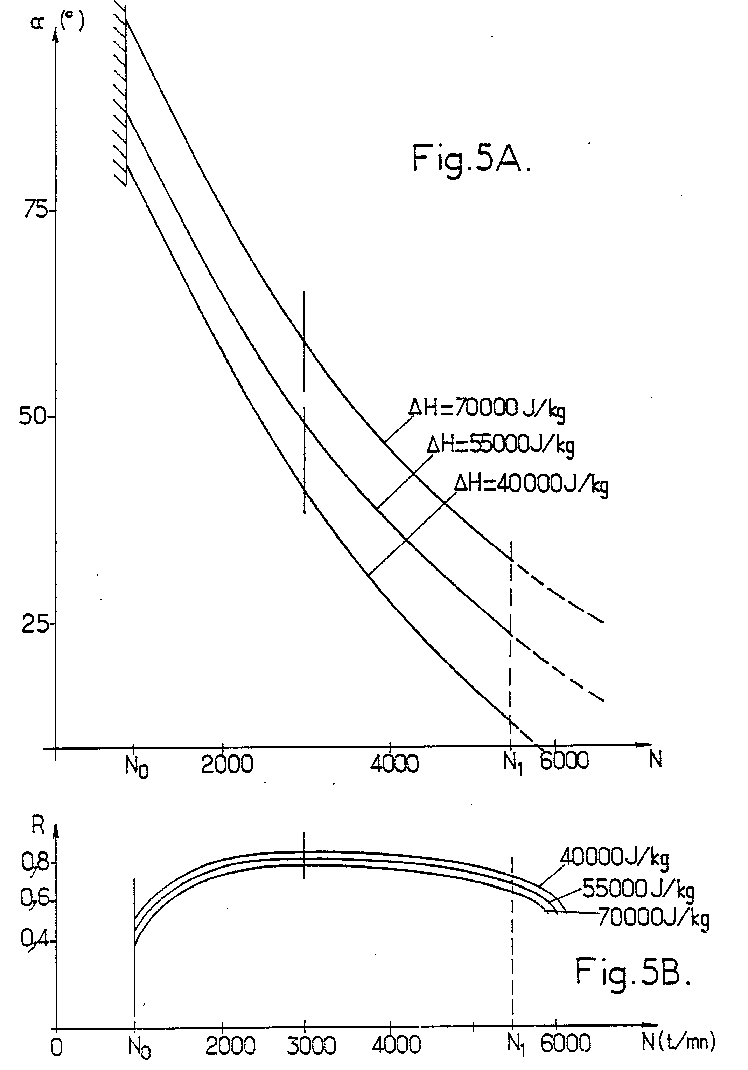

L'étude de l'ensemble du domaine de fonctionnement d'un moteur conduit à un réseau de courbes du genre montré en Figure 5A, donnant le calage optimal, pour lequel le rendement de turbine R est celui donné en Figure 5B. La partie utile du réseau de courbe est celle qui va de la vitesse de ralenti $N_0$ à la vitesse nominale $N_1$. Mais il suffit en pratique d'adopter une plage de variation du calage $\alpha$ correspondant à la zone de vitesse usuelle autour d'une valeur $N_2$, par exemple de 30° à 70° dans le cas des Figures 5A et 5B.

La variation de calage peut être réalisée automatiquement par des moyens très divers. On peut en particulier utiliser un système de cames de commande. On peut également utiliser des servomoteurs à pression de fluide. Sur la Figure 2 a été schématiquement indiqué un système de commande électrique. Ce système comprend un circuit de calcul 47 à mémoire cartographique recevant des signaux d'entrée et fournissant des signaux d'orientation à un moteur électrique 39 de déplacement angulaire de la couronne dentée 34. Les signaux d'entrée peuvent être fournis par un capteur de vitesse 42 (distributeur d'allumage par exemple) et par une sonde de température 44 placée dans la tubulure d'échappement, immédiatement en amont de la turbine. Une sonde supplémentaire peut être prévue pour mesurer la température en aval de la turbine. Le circuit 47 peut être numérique ou analogique. Dans le second cas, un asservissement en position du moteur 38 peut être réalisé en munissant ce dernier d'un capteur angulaire, par exemple d'un potentiomètre 46. Il n'est pas nécessaire de décrire ici le circuit 47 dont la construction peut être entièrement classique.

L'invention est susceptible de nombreuses variantes de réalisation. Les paramètres d'entrée peuvent être très divers. On peut notamment utiliser la position du papillon des gaz dans le cas d'un moteur d'automobile à allumage commandé. Le système d'entraînement mécanique des aubes peut prendre des formes très variées et comporter par exemple une couronne d'entraînement couplée à chaque aube 30 par une biellette.

### Revendications

1. Moteur à combustion interne avec un collecteur d'admission (20) et un collecteur d'échappement (22) suralimenté par au moins un turbocompresseur (12), comprenant au moins un compresseur (14) entraîné par une turbine (16), ayant des aubes de distributeur (30) à calage variable, un conduit de dérivation (26) étant prévu amenant une fraction du débit d'air délivrée par le compresseur (14) aux gaz d'échappement en amont de l'entrée de la turbine, le conduit de dérivation (26) prenant naissance du côté admission en amont d'un dispositif de laminage de gaz placé dans le collecteur d'admission (20) du moteur, caractérisé par le fait que la conduite de dérivation (26) livre passage à un flux de dérivation d'air frais continu, débouchant dans la tubulure d'échappement du moteur par un éjecteur (28), réduisant ainsi la température des gaz admis à la turbine (16), le ou les compresseurs étant dimensionnés en fonction du moteur afin que le taux de dilution (rapport du débit d'air dérivé en débit d'air traversant le moteur) soit inférieur à 3, le moteur comprenant en outre un système de commande d'orientation des aubes (30) recevant des signaux d'entrée représentatifs de la vitesse de rotation du moteur et de la température des gaz admis à la turbine (16).

2. Moteur selon la revendication 1, caractérisé en ce que la plage de débattement des aubes a une amplitude de 40° environ.

### Claims

1. Internal combustion engine having an intake manifold (20) and an exhaust manifold (22), supercharged by at least one turbine compressor unit (12) having at least a compressor (14) driven by a turbine (16) which has angularly adjustable distributor blades (30), a by-pass conduit (26) being provided for delivering part of the air flow discharged by the compressor (14) to the exhaust gas upstream of the inlet of the turbine, said by-pass conduit (26) originating upstream of a gas throttling device located in the intake manifold (20) of the engine, characterized in that the by-pass conduit (26) is for passage of a continuous by-pass flow of fresh air and opens through an ejector (28) into the exhaust pipe of the engine for decreasing the temperature of the gas entering the turbine (16), the compressor(s) being dimensioned in relation with the engine for the dilution rate (ratio of the by-pass air flow to the air flow through the engine) be lower than 3, the motor further comprising a system for adjusting the angular position of the blades (30) which receives input signals representative of the rotational speed of the engine and of the temperature of the gas delivered to the turbine (16).

2. Engine according to claim 1, characterized in that the range of movement of the blades is of about 40°.

### Patentansprüche

1. Verbrennungsmotor mit einem Ansaugrohr (20) und einem Auspuff (22), die durch wenigstens einen Turbokompressor (12) versorgt werden, mit wenigstens einem durch eine Turbine angetriebenen Kompressor (14), wobei die Turbine Leitschaufeln (30) mit variabler Steigung und ein Verzweigungsrohr (26), das zur Einleitung eines Teils der vom Kompressor (14) gelieferten Abluft in das Auspuffgas in Strömungsrichtung vor dem Turbineinlaß dient, besitzt und wobei das Verzweigungsrohr (26) von der Ansaugseite in Strömungsrichtung von einer im Ansaugrohr (20) des Motors angeordneten Drosselklappe ausgeht, dadurch gekennzeichnet, daß das Verzweigungsrohr (26) eine kontinuierliche Verzweigungsströmung von Frischluft ermöglicht, die durch einen Auslaß (28) in die Auspufföffnung des Motors abfließt, wodurch die Temperatur des der Turbine (16) zugeführten Gases konstant gehalten wird, daß der oder die Kompressoren so dimensioniert sind, daß bei laufendem Motor das Verdünnungsverhältnis (Verhältnis der abgezweigten Abluft zu der durch den Motor strömenden Abluft) kleiner als 3 ist und daß der Motor außerdem ein Schaufelorientierungs-Steuersystem aufweist, das Eingangssignale aufnimmt, die ein Maß für die Motordrehzahl und die Temperatur der der Turbine (16) zugeführten Gase sind.

2. Motor nach Anspruch 1, dadurch gekennzeichnet, daß der Steigungsbereich der Schaufeln in der Größenordnung von 40° liegt.

Fig.4.

Fig.3.

Fig.2.

Fig.1.

Fig.5A.

$\alpha$ (°)

$\Delta H = 70000\ J/kg$

$\Delta H = 55000\ J/kg$

$\Delta H = 40000\ J/kg$

75

50

25

$N_0$  2000  4000  $N_1$  6000  $N$

R

40000 J/kg

55000 J/kg

70000 J/kg

0,8

0,6

0,4

0  $N_0$  2000  3000  4000  $N_1$  6000  $N(t/mn)$

Fig.5B.